# EUROPÄISCHE PATENTSCHRIFT

(11) **EP 2 592 386 B1**
(45) Veröffentlichungstag und Bekanntmachung des Hinweises auf die Patenterteilung: **21.03.2018**
(21) Anmeldenummer: 12006903.4
(22) Anmeldetag: 05.10.2012
(51) Int. Cl.: G01C 21/30, G01C 21/36, G06K 9/00

(54) **Verfahren zur Positionsbestimmung**
Position determination method
Procédé de détermination de position

(30) Priorität: 10.11.2011 DE 102011118161
(43) Veröffentlichungstag der Anmeldung: 15.05.2013
(73) Patentinhaber: AUDI AG, 85045 Ingolstadt (DE); Volkswagen AG, 38436 Wolfsburg (DE)
(72) Erfinder: Kratzsch, Claudia, 85055 Ingolstadt (DE); Engel, Sebastian, 85051 Ingolstadt (DE); Rössler, Hendrik, 85051 Ingolstadt (DE)
(74) Vertreter: Thielmann, Frank

(56) Entgegenhaltungen:
- DE-A1-102009 008 959
- JP-A- 2010 266 383

## Beschreibung

Die Erfindung betrifft ein Verfahren zur Positionsbestimmung eines Kraftfahrzeugs, wobei ein Objekt mit bekannter geografischer Position optisch erfasst wird und die geografische Position des Objekts mit hinterlegten Kartendaten abgeglichen wird.

Ferner betrifft die Erfindung ein Fahrerassistenzsystem, welches zur Durchführung des Verfahrens zur Positionsbestimmung ausgebildet ist und ein Kraftfahrzeug mit einem derartigen Fahrerassistenzsystem.

Aus dem Stand der Technik sind Komfort-, Sicherheits-, und Fahrerassistenzsysteme für Kraftfahrzeuge bekannt, die eine exakte Positionsbestimmung des Kraftfahrzeugs benötigen. Als Beispiel sei auf Fahrerassistenzsysteme verwiesen, welche eine Fahrzeug-zu-Fahrzeug Kommunikationsplattform umfassen, die dazu dient, einen rückwärtigen Verkehrsteilnehmer vor einer lokalen Gefahr, wie einen Unfallort zu warnen. Ein weiteres Beispiel ist eine prädiktive Lichtsteuerung, welche schon bei Annäherung des Kraftfahrzeugs an einen Tunnel angesteuert wird, um die Sichtverhältnisse vorausschauend anzupassen oder ein Fahrerassistenzsystem mit vorausschauender Gangwahl, welches bei Annäherung an eine Kurve einen geeigneten Gang eines Getriebes vorgibt.

Typischerweise wird die Position des Fahrzeugs mit Hilfe eines satellitenbasierten Ortungssystems, wie insbesondere ein GPS-System (Global Positioning System) bestimmt. Dabei ist die Genauigkeit der Positionsbestimmung auf etwa 10 m aufgrund von Störungen in der atmosphärischen Strahlung, Mehrwegeausbreitung oder Uhrenfehlern in den Satelliten beschränkt.

Aus der JP 2010 266 383 A ist ein Verkehrsführungssystem bekannt, das zur Erkennung von Verkehrsschildern ausgebildet ist. Dieses System kann bei Fahrzeugen eingesetzt werden, die kein Navigationsgerät jedoch eine Kamera zum Erfassen des Bereichs vor dem Fahrzeug aufweisen. Durch die Kamera wird ein Verkehrszeichen detektiert und Buchstaben, ein Abschnitt oder eine grafische Darstellung einer Kreuzung oder dergleichen werden erfasst. Diese Informationen werden verarbeitet und auf einer Anzeige des Führungssystem dargestellt. Das eigene Fahrzeug wird auf einer grafischen Anzeige dargestellt, die auf der Auswertung von Verkehrsschildern beruht.

In der DE 10 2004 013 440 A1 wird ein Verfahren zur Präzisierung der Fahranweisungen eines Navigationssystems vorgeschlagen. Dazu werden Daten der Fahrumgebung, die mittels einer Kamera gewonnen wurden, in das Navigationssystem eingespeist.

Aus der DE 10 2007 023 765 A1 ist ein Verfahren zur Ausgabe einer Richtungsinformation bekannt, die einer auf einem Verkehrsschild angegebenen Ortsinformation entspricht, welche einem folgenden Abschnitt der Route zugeordnet ist. Dieses Verfahren soll die Orientierung in einem Straßennetz erleichtern, indem die ausgegebenen Richtungsinformationen reduziert werden.

Aus der US 6 393 360 B1 ist ein Verfahren zum automatischen Erfassen und Führen eines Fahrzeugs bekannt. Dieses Verfahren beruht auf einer Kommunikation zwischen ortsfesten Kommunikationseinheiten und in den Fahrzeugen installierten mobilen Kommunikationseinheiten.

In der DE 197 36 774 A1 wird ein Verfahren zum Anzeigen von Informationen in einem Kraftfahrzeug vorgeschlagen. Ein von einer bordeigenen Kamera aufgenommenes Bild wird einer Auswertung unterzogen, ein in dem Bild erkanntes Verkehrszeichen wird auf einer Anzeige in dem Fahrzeug angezeigt.

Aus der Druckschrift DE 10 2004 013 440 A1 ist ein Verfahren zur Präzisierung der Fahranweisungen eines Navigationssystems bekannt, bei dem eine Fahrzeugposition, welche mittels eines satellitenbasierten Ortungssystems bestimmt worden ist, präzisiert wird. Dabei werden Objekte, insbesondere Straßenschilder oder Ampeln mit bekannter geografischer Position, optisch erfasst. Mittels eines Abgleichs der geografischen Position der Objekte mit hinterlegten Kartendaten wird die Position des Kraftfahrzeugs präzisiert. Aus der Druckschrift DE 10 2009 008959 ist ein Verfahren zur Positionsbestimmung eines ein Navigationssystem mit einer digitalen Straßenkarte aufweisenden Kraftfahrzeugs bekannt, wobei die Ausgaben eines Satellitensignalsensors und die Ausgaben von Fahrzeugsensoren, Umfeldsensoren und/oder eines Verkehrstelematikempfängers verwendet werden, um die Fahrzeugposition zu bestimmen.

Es ist Aufgabe der vorliegenden Erfindung, ein verbessertes Verfahren zur Positionsbestimmung eines Kraftfahrzeugs, anzugeben, welches eine besonders präzise Positionsbestimmung ermöglicht.

Zur Lösung dieser Aufgabe ist ein Verfahren der eingangs genannten Art mit den Merkmalen des Anspruchs 1 vorgesehen.

Hinsichtlich der Vorrichtung wird die Aufgabe gelöst durch ein Fahrerassistenzsystem, welches zur Durchführung des Verfahrens zur Positionsbestimmung ausgebildet ist, und durch ein Kraftfahrzeug, welches ein so ausgebildetes Fahrerassistenzsystem aufweist.

Zahlreiche Straßen, wie insbesondere Landstraßen, Bundesstraßen und Autobahnen sind mit straßenrandseitig aufgestellten Straßenschildern versehen, welche jeweils Entfernungsangaben aufweisen. Erfindungsgemäß werden die Straßenschilder fahrzeugseitig automatisch erfasst und erkannt. Die jeweilig gezeigte Entfernungsangabe wird mittels einer entsprechenden Schrifterkennung ausgewertet. Die geografische Position des Straßenschilds und somit auch die Position des Kraftfahrzeugs wird mittels eines Abgleichs mit hinterlegten Kartendaten bestimmt. Da die Straßenschilder mit Entfernungsangaben häufig in regelmäßigen Abständen, die beispielsweise 500 m betragen können, entlang von Straßenverläufen zu finden sind, ist eine ständige Positionsbestimmung bzw. Überprüfung der Position des Fahrzeugs während der Fahrt ermöglicht. Weiterhin sind zur Implementierung des Verfahrens zur Positionsbestimmung nur fahrzeugseitige Modifikationen notwendig, die bereits vorhandenen Straßenschilder können auf besonders einfache Art und Weise zur Positionsbestimmung verwendet werden.

Die Entfernungsangabe gibt eine relative Distanz zu einem ersten Bezugspunkt, wie beispielsweise einer Autobahnauffahrt oder Autobahnabfahrt oder einem Ortszentrum an. Zur Positionsbestimmung des Kraftfahrzeugs wird ein zweiter Bezugspunkt, welcher mittels satellitenbasierter Ortung aus einer digitalen Straßenkarte eines Navigationssystems des Kraftfahrzeugs entnommen wird, mit dem ersten Bezugspunkt in Verbindung gebracht. Falls der reale erste Bezugspunkt und der zweite Bezugspunkt der digitalen Straßenkarte zu derselben geografischen Position korrespondieren, wird die Position des Kraftfahrzeugs bestimmt. Korrespondiert also beispielsweise der erste und zweite Bezugspunkt zu derselben Autobahnauf- oder -abfahrt, oder dem Beginn desselben Streckenverlaufs, so wird die Position des Kraftfahrzeugs bestimmt. Die Überprüfung der Korrespondenz des ersten Bezugspunkts zu dem zweiten Bezugspunkt stellt sicher, dass Fehler in der Positionsbestimmung des Kraftfahrzeugs minimiert werden. Erfindungsgemäß gibt die Entfernungsangabe die relative Distanz zum ersten Bezugspunkt entlang eines vorgegebenen Streckenverlaufs an. Dies kann beispielsweise dadurch realisiert sein, dass die verbleibende Distanz zum Ortszentrum der vorausliegenden Stadt als Entfernungsangabe auf dem Straßenschild angegeben ist. Alternativ dazu kann beispielsweise auch die relative Distanz vom ersten Bezugspunkt angegeben sein, der den Beginn einer Autobahn definiert. Der reale Streckenverlauf wird mit einem entsprechenden virtuellen Streckenverlauf der digitalen Straßenkarte abgeglichen und damit zugeordnet. Bei bekanntem Abbildungsverhältnis der digitalen Straßenkarte wird dann anhand der erfassten und ausgelesenen Entfernungsangabe die Position des Kraftfahrzeugs bestimmt.

In einem bevorzugten Ausführungsbeispiel der Erfindung wird die Position des Kraftfahrzeugs auf der digitalen Straßenkarte mittels einer dazu vorgesehenen Anzeigeeinheit, welche insbesondere in einer Instrumententafel des Kraftfahrzeugs integriert ist, angezeigt. In besonders bevorzugter Art und Weise erfolgt die Ausgabe der Position des Kraftfahrzeugs auf der digitalen Straßenkarte fortlaufend während der Fahrt, um insbesondere einen Fahrzeugführer bestmöglichst zu informieren.

Vorzugsweise wird das Straßenschild während der Fahrt mittels einer optischen Erfassungseinheit erfasst, welche einen in Fahrtrichtung ausgerichteten Erfassungsbereich aufweist und zumindest einen fahrbahnrandseitigen Bereich erfasst, in dem Straßenschilder typischerweise zu finden sind. In besonders bevorzugter Weise beschränkt sich eine Auswertung der von der optischen Erfassungseinheit erzeugten Bilddaten auf Daten des fahrbahnrandseitigen Bereichs, so dass Rechenzeit eingespart ist und das Verfahren schnell und zuverlässig durchgeführt wird.

Das Straßenschild wird während der Fahrt vorzugsweise zu einem ersten Zeitpunkt erfasst und die Position des Kraftfahrzeugs zu einem zweiten Zeitpunkt bestimmt. Der zweite Zeitpunkt ist dadurch definiert, dass das erfasste Straßenschild den in Fahrtrichtung ausgerichteten Erfassungsbereich der optischen Erfassungseinheit verlässt. Dies kann insbesondere von einer entsprechenden Bilderkennungssoftware automatisch erkannt werden. Die Positionsbestimmung des Kraftfahrzeugs zum zweiten Zeitpunkt stellt sicher, dass sich das Kraftfahrzeug in unmittelbarer Nähe zum Straßenschild befindet, um Fehler in der Positionsbestimmung zu minimieren.

In einem bevorzugten Ausbildungsbeispiel der Erfindung wird der Erfassungsbereich der optischen Erfassungseinheit kontinuierlich und fortlaufend erfasst. Dabei werden Bilddaten in Form von Videosequenzen generiert, die eine entsprechende Fahrzeugumgebung abbilden. Eine virtuelle Position des erfassten Straßenschilds in den Bilddaten wird insbesondere zwischen dem ersten und dem zweiten Zeitpunkt fortlaufend überprüft, um etwaige Fehlerquellen bei der Positionsbestimmung weitgehend auszuschließen. Erfindungsgemäß wird die Position des Kraftfahrzeugs zusätzlich mittels einer satellitenbasierten Ortung bestimmt. Dies kann insbesondere mittels eines bekannten Ortungssystems, wie dem GPS-System (Global Positioning System) erfolgen. Es ist insbesondere vorgesehen, dass zunächst eine grobe Positionsbestimmung des Kraftfahrzeugs mittels der satellitenbasierten Ortung erfolgt und anschließend die Positionsbestimmung mittels des erfindungsgemäßen Verfahrens präzisiert wird. So kann beispielsweise zunächst die Position des Kraftfahrzeugs mittels der satellitenbasierten Ortung dahingehend bestimmt werden, dass ein Streckenverlauf oder eine Straße, insbesondere eine Autobahn bestimmt wird, auf der sich das Kraftfahrzeug befindet. Wird daraufhin das Straßenschild mit der Entfernungsangabe optisch erfasst, erkannt und ausgewertet, so ist bekannt, auf welchen ersten Bezugspunkt sich die Entfernungsangabe bezieht, da dieser typischerweise dem entsprechenden Streckenverlauf zugeordnet ist. So sind Autobahnen beispielsweise mit entfernungsangebenden Straßenschildern versehen, die die Entfernung vom entsprechenden Begin der jeweiligen Autobahn zeigen.

Ein Fahrerassistenzsystem für ein Kraftfahrzeug ist zur Durchführung des erfindungsgemäßen Verfahrens zur Positionsbestimmung ausgebildet. Dazu weist das Fahrerassistenzsystem zumindest eine optische Erfassungseinheit auf, mittels der ein fahrzeugfrontseitiger Bereich optisch erfassbar ist. Ferner umfasst das Fahrerassistenzsystem eine Auswerteeinheit zur Auswertung der von der optischen Erfassungseinheit generierten Bilddaten. Das Fahrerassistenzsystem ist vorzugsweise in einem Kraftfahrzeug integriert und mit einer Bild- und Schrifterkennung ausgestattet, die beispielsweise in Form entsprechender Software in der Auswerteeinheit implementiert sind. Für das Fahrerassistenzsystem und das dieses aufweisende Kraftfahrzeug gelten die Erläuterungen des Verfahrens entsprechend.

Weitere Vorteile und Einzelheiten von Ausführungsformen der Erfindung ergeben sich aus der nachfolgenden Beschreibung mit Bezug auf die Figuren.

Dabei zeigen:
- Fig. 1: schematisch ein erfindungsgemäßes Kraftfahrzeug mit einem Fahrerassistenzsystem,
- Fig. 2: schematisch ein Ablaufdiagramm eines erfindungsgemäßen Verfahrens zur Positionsbestimmung des Kraftfahrzeugs.

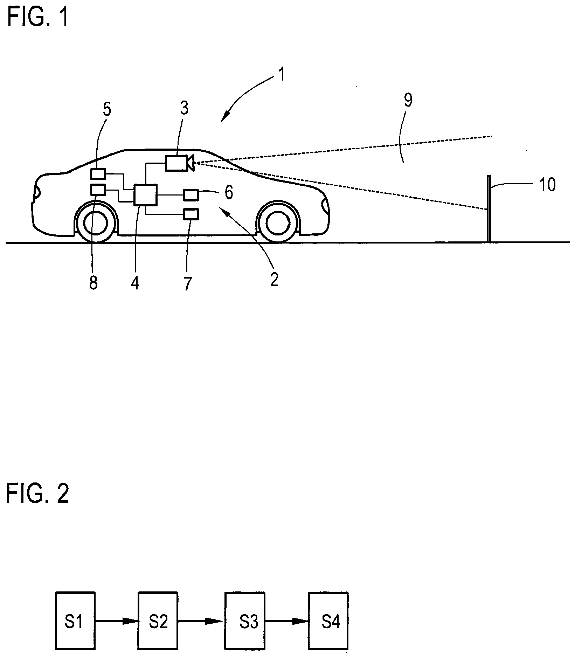

Fig. 1 zeigt einen schematischen Aufbau eines Kraftfahrzeugs 1 mit einem Fahrerassistenzsystem 2. Das Fahrerassistenzsystem 2 weist eine optische Erfassungseinheit 3 auf, die in Fahrtrichtung ausgerichtet ist, so dass ein fahrzeugfrontseitiger Erfassungsbereich 9 erfassbar ist. Darüber hinaus liegt ein fahrbahnrandseitiger Bereich innerhalb des Erfassungsbereichs 9, so dass ein im fahrbahnrandseitigen Bereich befindliches Straßenschild 10 von der optischen Erfassungseinheit 3 erfassbar ist.

Die optische Erfassungseinheit 3 steht in einer Wirkverbindung mit einer Auswerteeinheit 4, so dass optisch erfasste Bilddaten von der optischen Erfassungseinheit 3 an die Auswerteeinheit 4 übertragbar sind.

Eine Bild- und Schrifterkennung ist in Gestalt entsprechender Software in der Auswerteeinheit 4 implementiert. Die Auswerteeinheit 4 ist weiterhin mit einem Speichermedium 5 verbunden, auf dem Daten einer digitalen Straßenkarte abgelegt sind. Die digitale Straßenkarte K ist auf einer Anzeigeeinheit 6, welche beispielsweise als Display oder Monitor ausgeführt ist und in der Instrumententafel des Kraftfahrzeugs 1 integriert ist, ausgebbar.

Das Fahrerassistenzsystem 2 umfasst ferner eine Steuereinheit 7, mittels der Fahrzustandsgrößen automatisch veränderbar sind. Beispielsweise kann mittels der Steuereinheit 7 bei erkannter Gefahr eine Verzögerung des Kraftfahrzeugs 1 automatisch eingeleitet werden oder ein Gierwinkel des Kraftfahrzeugs 1 verändert werden, um ein Ausweichmanöver einzuleiten.

Ferner ist ein Empfänger 8 vorgesehen, der in einer Wirkverbindung mit der Auswerteeinheit 4 steht. Mittels des Empfängers 8 sind satellitenbasierte Signale empfangbar, die zur Auswertung der Auswerteeinheit 4 zuführbar sind. Dabei ist eine Position des Kraftfahrzeugs 1 bestimmbar. Insbesondere ist in einem bevorzugten Ausführungsbeispiel der Erfindung der Empfänger 8 als GPS-Empfänger (Global Positioning System) ausgebildet.

Zusätzlich ist das Fahrerassistenzsystem 2 als Navigationssystem ausgebildet bei dem in nicht näher dargestellter Art und Weise eine Eingabeeinheit vorgesehen ist, mittels derer beispielsweise ein Fahrtziel vorgebbar ist. Mittels der Auswerteeinheit 4 und anhand der hinterlegten digitalen Straßenkarte ist vom gegenwärtigen Standort des Kraftfahrzeugs 1 eine Route oder Streckenverlauf zum vorgegebenen Fahrtziel berechenbar. Diese Route ist zusammen mit einem geeigneten Ausschnitt der digitalen Straßenkarte auf der Anzeigeeinheit 6 zur Information des Fahrzeugführers anzeigbar. Zusätzlich sind Fahranweisungen auf der Anzeigeeinheit 6 ausgebbar, welche beispielsweise den Fahrzeugführer anweisen, einen Abbiegevorgang durchzuführen.

Zusätzlich weist das Fahrerassistenzsystem 2 eine nicht näher dargestellte Kommunikationsplattform auf, welche eine Kommunikation mit ähnlich ausgestatteten Fahrzeugen anderer Verkehrsteilnehmer ermöglicht. Insbesondere ist dadurch ermöglicht, ein dem Kraftfahrzeug 1 folgendes weiteres Fahrzeug bei Vorliegen einer Gefahrensituation, wie einer abrupten Bremsung, einem Stau oder einer Verunfallung zu warnen.

Fig. 2 illustriert ein Verfahren zur Bestimmung der Position des Kraftfahrzeugs 1 schematisch in einem Ablaufdiagramm. In einem ersten Verfahrensschritt S1 werden von der optischen Erfassungseinheit 3 fortlaufend während der Fahrt erfasste Bilddaten ausgewertet. Dazu werden zumindest die zu dem fahrbahnrandseitigen Bereich korrespondierende Bilddaten beispielsweise zeilen- und/oder spaltenweise abgetastet, um ein etwaiges Straßenschild 10 zu erkennen. Wird das Straßenschild 10, welches eine Entfernungsangabe zeigt, im ersten Verfahrensschritt S1 erkannt, so werden in einem darauffolgenden Verfahrensschritt S2 die erfassten Bilddaten mittels der Schrifterkennung ausgewertet, wobei die Entfernungsangabe ausgelesen wird. Zusätzlich wird in einem bevorzugten Ausbildungsbeispiel der Erfindung das erkannte Straßenschild 10 auf der Anzeigeeinheit 6 ausgegeben. Die Entfernungsangabe gibt beispielsweise die Distanz zu einem Ortsanfang oder einer Ortsmitte einer nahegelegenen Stadt an. Somit ist die Entfernungsangabe eine Angabe einer relativen Distanz zu einem ersten Bezugspunkt, der beispielsweise von der geografischen Position der Ortsmitte der nahegelegenen Stadt oder von einem Anfang oder einem Ende einer Autobahn oder Bundesstraße definiert ist.

In einem dritten Verfahrensschritt S3 wird die virtuelle Position des erfassten Straßenschilds 10 in den während der Fahrt von der Erfassungseinheit 3 kontinuierlich generierten Bilddaten überwacht. Eine Positionsbestimmung des Kraftfahrzeugs 1 wird erst dann vorgenommen, wenn das Straßenschild 10 den Erfassungsbereich 9 der optischen Erfassungseinheit 3 verlässt und somit nicht mehr in den Bilddaten zu finden ist. Somit wird sichergestellt, dass ein Abstand zwischen dem Kraftfahrzeug 1 und dem Straßenschild 10 minimiert ist, um die Position des Kraftfahrzeugs mit möglichst hoher Genauigkeit zu bestimmen. Das Straßenschild wird im ersten Verfahrensschritt S1 zu einem ersten Zeitpunkt erfasst und erkannt, wobei jedoch eine Positionsbestimmung des Kraftfahrzeugs 1 unterbleibt, bis das Kraftfahrzeug 1 zu einem zweiten Zeitpunkt das Straßenschild 10 erreicht und das Straßenschild 10 den fahrzeugfrontseitig ausgerichteten Erfassungsbereich E verlässt.

Das Straßenschild 10 hat eine bekannte geografische Position, die mittels der Entfernungsangabe bezüglich des ersten Bezugspunkts angegeben ist. Zur korrekten Bestimmung der Position des Kraftfahrzeugs 1 wird die Entfernungsangabe und der erste Bezugspunkt mit den Daten der hinterlegten digitalen Straßenkarte abgeglichen. Dabei werden die virtuellen Streckenverläufe und die dazugehörigen virtuellen zweiten Bezugspunkte der digitalen Straßenkarte bestimmt und mit dem ersten Bezugspunkt verglichen. Korrespondiert der erste Bezugspunkt zu dem zweiten Bezugspunkt, entsprechen also der erste und der zweite Bezugspunkt derselben geografischen Position, so ist die Strecke, auf dem sich das Kraftfahrzeug 1 befindet, eindeutig einem Streckenverlauf der hinterlegten digitalen Straßenkarte zugeordnet. Somit ist es ermöglicht, die Position des Kraftfahrzeugs 1 anhand der digitalen Straßenkarte zu bestimmen, da die zurückgelegte oder zurückzulegende Distanz entlang des Streckenverlaufs entsprechend der Entfernungsangabe, bekannt ist. Vorzugsweise wird die so ermittelte Position des Kraftfahrzeugs 1 auf der Anzeigeeinheit 6 ausgegeben.

Zusätzlich wird die Position des Kraftfahrzeugs 1 mittels einer satellitenbasierten Ortung vorgenommen. Dabei werden entsprechende Satellitensignale vom Empfänger 8 empfangen und zur Auswertung der Auswerteeinheit 4 zugeführt. Dies geschieht insbesondere im Rahmen eines GPS-Systems. Die satellitenbasierte Ortung kann insbesondere dazu dienen, die Position vor Ablauf des erfindungsgemäßen Verfahrens grob zu bestimmen. Dies hat den Vorteil, dass zumindest die korrekte Straße bzw. Strecke, auf der sich das Kraftfahrzeug 1 befindet, anhand der digitalen Straßenkarte ermittelt wird. Somit ist der erste Bezugspunkt im Vorfeld bekannt, da dieser typischerweise der Straße oder Strecke, auf dem sich das Kraftfahrzeug 1 befindet, zugeordnet ist.

Damit lässt sich anhand der satellitenbasierten Ortung der zu dem ersten Bezugspunkt korrespondierende zweite Bezugspunkt in den Daten der digitalen Straßenkarte leicht finden und die Position des Kraftfahrzeugs 1 entsprechend des bereits beschriebenen Verfahrens bestimmen.

## Patentansprüche

1. Verfahren zur Positionsbestimmung eines ein Navigationssystem mit einer digitalen Straßenkarte aufweisenden Kraftfahrzeugs (1), mit den folgenden Schritten:
- optisches Erfassen eines Objekts mit einer bekannten geografischen Position, wobei das Objekt ein Straßenschild (10) mit einer Entfernungsangabe ist, welches fahrzeugseitig optisch erkannt wird; **gekennzeichnet durch**
- anschließendes Auswerten der Entfernungsangabe mittels einer Schrifterkennung, wobei die Entfernungsangabe eine relative Distanz zu einem ersten Bezugspunkt mit bekannter geografischer Position entlang eines vorgegebenen Streckenverlaufs angibt;
- Abgleichen der Entfernungsangabe und des ersten Bezugspunkts mit einem zweiten Bezugspunkt der digitalen Straßenkarte, der durch das Navigationssystem mittels satellitenbasierter Ortung bestimmt wird;
- wobei in dem Fall, wenn der erste Bezugspunkt unter Berücksichtigung der Entfernungsangabe und der zweite Bezugspunkt zu derselben geografischen Position korrespondieren, diese geografische Position als Position des Kraftfahrzeugs (1) festgelegt wird.

2. Verfahren nach Anspruch 1,
**dadurch gekennzeichnet,**
**dass** die Entfernungsangabe die relative Distanz zum ersten Bezugspunkt entlang eines Streckenverlaufs zu einem vorgegebenen Fahrtziel angibt, welcher zur Positionsbestimmung des Kraftfahrzeugs (1) mit einem virtuellen Streckenverlauf der digitalen Straßenkarte abgeglichen wird.

3. Verfahren nach Anspruch 1 oder 2,
**dadurch gekennzeichnet,**
**dass** die bestimmte Position des Kraftfahrzeugs (1) auf der digitalen Straßenkarte angezeigt wird.

4. Verfahren nach einem der vorherigen Ansprüche,
**dadurch gekennzeichnet,**
**dass** das Straßenschild (10) während einer Fahrt mittels einer optischen Erfassungseinheit (3) erfasst wird, welche einen Erfassungsbereich (9) aufweist, der in Fahrtrichtung des Kraftfahrzeugs (1) gerichtet ist und zumindest einen fahrbahnrandseitigen Bereich erfasst, welcher zur Erfassung des Straßenschilds (10) und bei der Schrifterkennung ausgewertet wird.

5. Verfahren nach Anspruch 4,
**dadurch gekennzeichnet,**
**dass** das Straßenschild (10) während der Fahrt zu einem ersten Zeitpunkt erfasst wird und die Position des Kraftfahrzeugs (1) zu einem zweiten Zeitpunkt bestimmt wird, wenn das Straßenschild (10) den Erfassungsbereich (9) zum zweiten Zeitpunkt verlässt.

6. Verfahren nach Anspruch 5,
**dadurch gekennzeichnet,**
**dass** die optische Erfassungseinheit (3) den Erfassungsbereich (9) fortlaufend erfasst und dabei Bilddaten generiert, wobei eine virtuelle Position des erfassten Straßenschilds in den Bilddaten zwischen dem ersten und dem zweiten Zeitpunkt fortlaufend überprüft wird.

7. Verfahren nach einem der vorherigen Ansprüche,
**dadurch gekennzeichnet,**
**dass** als erster Bezugspunkt eine Autobahnauffahrt, eine Autobehanabfahrt, ein Ortszentrum oder ein Anfang oder ein Ende einer Autobahn oder einer Bundesstraße verwendet wird.

8. Fahrerassistenzsystem (2) für ein Kraftfahrzeug (1), welches zur Durchführung eines Verfahrens nach einem der vorherigen Ansprüche ausgebildet ist, umfassend:
- eine optische Erfassungseinheit (3) zum Erfassen eines fahrzeugfrontseitigen Erfassungsbereichs (9),
- eine Auswerteeinheit (4), an die optische erfasste Bilddaten von der optischen Erfassungseinheit (3) übertragbar sind,
- eine in der Auswerteeinheit (4) implementierte Bild- und Schrifterkennung, und
- ein Speichermedium (5), auf dem Daten einer digitalen Straßenkarte abgelegt sind.

9. Kraftfahrzeug (1) mit einem Fahrerassistenzsystem (2) nach Anspruch 8.

## Claims

1. Method for the position determination of a motor vehicle (1) comprising a navigation system with a digital street map, having the following steps:
- optically detecting an object with a known, geographic position, wherein the object is a street sign (10) with distance information which is optically detected by the vehicle; **characterised by**
- subsequently evaluating the distance information by means of character recognition, wherein the distance information indicates a relative distance to a first reference point with known geographic position along a predefined route;
- comparing the distance information and the first reference point with a second reference point of the digital street map which is determined by the navigation system by means of satellite positioning;
- wherein in the case where the first reference point, taking into account the distance information, and the second reference point correspond to the same geographic position, this geographic position is determined as the position of the motor vehicle (1).

2. Method according to claim 1,
**characterised in that**
the distance information indicates the relative distance to the first reference point along a route to a predefined destination, which is compared with a virtual route of the digital street map for the position determination of the motor vehicle (1).

3. Method according to claim 1 or 2,
**characterised in that**
the determined position of the motor vehicle (1) is displayed on the digital street map.

4. Method according to any one of the preceding claims,
**characterised in that**
the street sign (10) is detected during a journey by means of an optical detection unit (3) which has a detection range (9) which is directed in the direction of travel of the motor vehicle (1) and detects at least one road edge region which is evaluated in order to detect the street sign (10) and for character recognition.

5. Method according to claim 4,
**characterised in that**
the street sign (10) is detected during the journey at a first time and the position of the motor vehicle (1) is determined at a second time when the street sign (10) leaves the detection range (9) at the second time.

6. Method according to claim 5,
**characterised in that**
the optical detection unit (3) continuously detects the detection range (9) and generates image data, wherein a virtual position of the detected street sign is continuously verified in the image data between the first and the second time.

7. Method according to any one of the preceding claims,
**characterised in that**
a motorway entrance, a motorway exit, a town centre or a start or an end of a motorway or a main road is used as the first reference point.

8. Driver assistance system (2) for a motor vehicle (1) which is designed to perform a method according to any one of the preceding claims, comprising:
- an optical detection unit (3) for detecting a detection range (9) at the front of the vehicle,
- an evaluation unit (4), to which the optical detected image data are transferred from the optical detection unit (3),
- image and character recognition implemented in the evaluation unit (4), and
- a memory medium (5) on which data of a digital street map are stored.

9. Motor vehicle (1) with a driver assistance system (2) according to claim 8.

## Revendications

1. Procédé de détermination de position d'un véhicule automobile (1) comportant un système de navigation avec une carte routière numérique, avec les étapes suivantes :
- la détection optique d'un objet ayant une position géographique connue, lequel objet est un panneau routier (10) qui est muni d'une indication de distance et qui peut être reconnu optiquement côté véhicule ;
**caractérisé par**
- l'évaluation consécutive de l'indication de distance au moyen d'une reconnaissance d'écriture, laquelle indication de distance indique une distance relative jusqu'à un premier point de référence ayant une position géographique connue le long d'un trajet prédéterminé ;
- la comparaison de l'indication de distance et du premier point de référence à un deuxième point de référence de la carte routière numérique, lequel deuxième point de référence est déterminé par le système de navigation au moyen d'une localisation par satellite ;
- dans lequel, si le premier point de référence en tenant compte de l'indication de distance et le deuxième point de référence pour la même position géographique se correspondent, cette position géographique est définie comme position du véhicule automobile (1).

2. Procédé selon la revendication 1, **caractérisé en ce que** l'indication de distance indique la distance relative jusqu'au premier point de référence le long d'un trajet menant à une destination de trajet prédéterminée, lequel trajet est comparé, en vue de la détermination de position du véhicule automobile (1), à un trajet virtuel de la carte routière numérique.

3. Procédé selon la revendication 1 ou 2, **caractérisé en ce que** la position déterminée du véhicule automobile (1) est affichée sur la carte routière numérique.

4. Procédé selon l'une des revendications précédentes, **caractérisé en ce que** le panneau routier (10) est détecté pendant un trajet au moyen d'une unité de détection optique (3) qui comporte une zone de détection (9) qui est dirigée dans le sens d'avance du véhicule automobile (1) et qui détecte au moins une zone qui est située sur le côté de la chaussée et qui est évaluée pour la détection du panneau routier (10) et lors de la reconnaissance d'écriture.

5. Procédé selon la revendication 4, **caractérisé en ce que** le panneau routier (10) est détecté pendant le trajet à un premier instant et la position du véhicule automobile (1) est déterminée à un deuxième instant lorsque le panneau routier (10) quitte la zone de détection (9) au deuxième instant.

6. Procédé selon la revendication 5, **caractérisé en ce que** l'unité de détection optique (3) détecte en continu la zone de détection (9) et génère ce faisant des données d'image, une position virtuelle du panneau routier détecté dans les données d'image étant vérifiée en continu entre le premier instant et le deuxième instant.

7. Procédé selon l'une quelconque des revendications précédentes, **caractérisé en ce que**, comme premier point de référence, on utilise une entrée d'autoroute, une sortie d'autoroute, un centre-ville ou un début ou une fin d'une autoroute ou d'une route nationale.

8. Système d'assistance au conducteur (2) pour un véhicule automobile (1), lequel système est conçu pour la mise en oeuvre d'un procédé selon l'une des revendications précédentes, comprenant :
- une unité de détection optique (3) en vue de la détection d'une zone de détection (9) à l'avant du véhicule,
- une unité d'évaluation (4) à laquelle des données d'image détectées optiquement peuvent être transmises par l'unité de détection optique (3),
- une reconnaissance d'image et d'écriture installée dans l'unité d'évaluation (4), et
- un support de mémoire (5) sur lequel des données d'une carte routière numérique sont enregistrées.

9. Véhicule automobile (1) avec un système d'assistance au conducteur (2) selon la revendication 8.
